# EUROPÄISCHE PATENTSCHRIFT

(11) **EP 2 424 743 B1**
(45) Veröffentlichungstag und Bekanntmachung des Hinweises auf die Patenterteilung: **07.08.2019**
(21) Anmeldenummer: 10718559.7
(22) Anmeldetag: 28.04.2010
(51) Int. Cl.: B60K 35/00, G06F 3/01

(54) **VERFAHREN ZUM ANZEIGEN UND EINGEBEN VON INFORMATIONEN IN EINEM KRAFTFAHRZEUG UND ANZEIGEEINRICHTUNG**
METHOD FOR DISPLAYING AND INPUTTING INFORMATION IN A MOTOR VEHICLE, AND DISPLAY DEVICE
PROCÉDÉ POUR AFFICHER ET ENTRER DES INFORMATIONS DANS UN VÉHICULE À MOTEUR ET DISPOSITIF D'AFFICHAGE

(30) Priorität: 30.04.2009 DE 102009019561
(43) Veröffentlichungstag der Anmeldung: 07.03.2012
(73) Patentinhaber: Volkswagen Aktiengesellschaft, 38440 Wolfsburg (DE)
(72) Erfinder: HAUSCHILD, Frank, 10587 Berlin (DE); KUHN, Mathias, 14129 Berlin (DE); DEHMANN, Rainer, 10961 Berlin (DE)
(74) Vertreter: Reitstötter Kinzebach
(86) Internationale Anmeldenummer: PCT/EP2010/055752
(87) Internationale Veröffentlichungsnummer: WO 2010/125121

(56) Entgegenhaltungen:
- DE-A1- 4 121 180
- DE-A1-102006 028 046
- DE-A1-102007 029 618

## Beschreibung

Die vorliegende Erfindung betrifft ein Verfahren zum Anzeigen von Informationen mittels eines in einem Kraftfahrzeug befestigten Displays, bei dem von einer Benutzerschnittstelleneinrichtung Graphikdaten erzeugt werden, die zumindest einen Teilbereich des Displays so ansteuern, dass in einem Bedienzustand Informationen dargestellt werden, die zumindest einem mittels einer Eingabeeinrichtung ausführbaren Bedienschritt zugeordnet sind, und in einem Anzeigezustand Informationen dargestellt werden, die keinen Bedienschritten zugeordnet sind. Ferner wird ein Eintreten eines Objekts in eine Bedienzone, die einer Eingabeeinrichtung zugeordnet ist, und ein Verlassen der Bedienzone detektiert. Des Weiteren betrifft die Erfindung eine Anzeigeeinrichtung für ein Kraftfahrzeug mit einem in dem Kraftfahrzeug befestigten Display, einer Eingabeeinrichtung und einem Annhäherungssensor, mit dem ein Eintreten eines Objekts in eine Bedienzone, die der Eingabeeinrichtung zugeordnet ist, und ein Verlassen der Bedienzone detektierbar ist. Die Anzeigeeinrichtung umfasst des Weiteren eine Benutzerschnittstelleneinrichtung, mit welcher Graphikdaten erzeugbar sind, die zumindest einen Teilbereich des Displays so ansteuern, dass in einem Bedienzustand Informationen dargestellt werden, die einem mittels der Eingabeeinrichtung ausführbaren Bedienschritt zugeordnet sind, und in einem Anzeigezustand Informationen dargestellt werden, die keinen Bedienschritten zugeordnet sind. Ein solches Verfahren und eine solche Anzeigeeinrichtung sind aus der DE 10 2007 039 445 A1 bekannt.

Ferner wechselt bei dem Verfahren gemäß der Erfindung die Benutzerschnittstelleneinrichtung von dem Bedienzustand in den Anzeigezustand, wenn das Objekt die Bedienzone verlässt und wenn das Objekt nicht innerhalb eines definierten Zeitintervalls wieder in die Bedienzone eintritt. Ferner ist bei der Anzeigeeinrichtung gemäß der Erfindung die Benutzerschnittstelleneinrichtung so ausgebildet, dass von dem Bedienzustand in den Anzeigezustand gewechselt wird, wenn das Objekt die Bedienzone verlässt und wenn das Objekt nicht innerhalb eines definierten Zeitintervalls wieder in die Bedienzone eintritt.

Ein solches Verfahren und eine solche Anzeigeeinrichtung sind aus der gattungsbildenden DE 10 2006 028 046 A1 bekannt.

Es ist wünschenswert, die Informationen im Kraftfahrzeug so darzustellen, dass sie schnell und intuitiv vom Fahrer aufgenommen werden können, so dass das Erfassen der dargestellten Informationen nicht zu einer Ablenkung des Fahrers während der Fahrt führt. Ferner soll die Bedienung so intuitiv, einfach und schnell durchführbar sein, dass der Fahrer die Einrichtungen des Fahrzeugs, deren Informationen von der Anzeigeeinrichtung dargestellt werden, auch während der Fahrt bedienen kann, selbst wenn von der Anzeigeeinrichtung gegebenenfalls komplexe hierarchische Strukturen darstellbar sind. Die Informationsdarstellung und die mit einer Informationsdarstellung verbundene Bedienung in dem Kraftfahrzeug trägt somit zur Sicherheit beim Führen des Kraftfahrzeugs bei.

Es ist die Aufgabe der vorliegenden Erfindung, ein Verfahren und eine Anzeigeeinrichtung der Eingangs genannten Art bereitzustellen, mit denen die von der Anzeige unterstützte Bedienung von Einrichtungen des Kraftfahrzeugs vereinfacht wird.

Diese Aufgabe wird erfindungsgemäß durch ein Verfahren mit dem Merkmal des Anspruchs 1 und einer Anzeigeeinrichtung mit den Merkmalen des Anspruchs 8 gelöst. Vorteilhafte Aus- und Weiterbildungen ergeben sich aus den abhängigen Ansprüchen.

Das erfindungsgemäße Verfahren ist dadurch gekennzeichnet, dass die Geschwindigkeit des Fahrzeugs erfasst wird und die Länge des Zeitintervalls in Abhängigkeit von der Fahrzeuggeschwindigkeit festgelegt wird.

Bei bekannten Verfahren wechselt die Benutzerschnittstelleneinrichtung von dem Bedienzustand in den Anzeigezustand unmittelbar, wenn das Objekt die Bedienzone verlässt. Bei dem Objekt handelt es sich vielfach um eine Bedienhand des Fahrers des Kraftfahrzeugs. In diesem Fall kann es vorkommen, dass der Fahrer seine Bedienhand kurzzeitig aus der Bedienzone heraus führt, um beispielsweise das Lenkrad mit beiden Händen anfassen zu können, obwohl der Bedienvorgang noch nicht abgeschlossen ist. In diesem Fall ist es nachteilig, wenn die Anzeige unmittelbar in den Anzeigezustand wechselt, wenn die Bedienhand die Bedienzone verlassen hat. Des Weiteren kann ein ungewolltes Verlassen der Bedienzone aufgrund von Fahrzeugvibrationen auftreten.

Bei dem erfindungsgemäßen Verfahren kann der Nutzer seine Bedienhand nach dem ungewollten Verlassen der Bedienzone oder nach einer kurzzeitigen Steuerung des Lenkrads mit der Bedienhand wieder in die Bedienzone einführen, um den Bedienvorgang fortzuführen. In diesem Fall kommt es bei dem erfindungsgemäßen Verfahren nicht zu einem ungewollten Wechsel vom Bedienzustand in den Anzeigezustand. Hierdurch wird der Bedienvorgang für den Nutzer vereinfacht, da er nicht durch eine zwischenzeitliche Anzeige im Anzeigezustand möglicherweise verwirrt wird.

Der Bedienzustand und der Anzeigezustand sind bei dem erfindungsgemäßen Verfahren klar voneinander getrennt. Im Anzeigezustand werden keinerlei Informationen dargestellt, die mit der Bedienung der laufenden Anwendung in direktem Zusammenhang stehen. Es werden insbesondere keine Schaltflächen dargestellt. Im Bedienzustand werden hingegen Informationen dargestellt, die zumindest einem mittels der Eingabeeinrichtung ausführbaren Bedienschritt zugeordnet sind. Es werden insbesondere Schaltflächen dargestellt. Im Bedienzustand können gegebenenfalls weiterhin Informationen des Anzeigezustands dargestellt werden, denen jedoch aufgrund der Darstellung der Informationen für den Bedienzustand weniger Fläche auf dem Display zur Verfügung steht.

Unter einer *Schaltfläche* wird im Sinne der Erfindung ein Steuerelement einer graphischen Benutzerschnittstelle verstanden. Eine Schaltfläche unterscheidet sich von Elementen und Flächen zur reinen Informationsanzeige, so genannten Anzeigeelementen bzw. Anzeigenflächen, darin, dass sie auswählbar sind. Bei einer Auswahl einer Schaltfläche wird eine ihr zugeordnete Funktion ausgeführt. Die Funktion kann nur zu einer Veränderung der Informationsanzeige führen. Ferner können über die Schaltflächen auch Einrichtungen gesteuert werden, deren Bedienung von der Informationsanzeige unterstützt wird. Die Schaltflächen können somit herkömmliche mechanische Schalter ersetzen. Die Schaltflächen können beliebig auf einer frei programmierbaren Anzeigefläche erzeugt und angezeigt werden. Des Weiteren kann vorgesehen sein, dass eine Schaltfläche markiert werden kann. In diesem Fall wird die zugeordnete Funktion noch nicht ausgeführt. Die markierte Schaltfläche wird jedoch gegenüber anderen Schaltflächen hervorgehoben dargestellt. Die Markierung und/oder Auswahl einer Schaltfläche kann mittels einer Cursorsteuerung oder durch direkte Bedienung einer berührungsempfindlichen Anzeigefläche erfolgen.

Gemäß einer Ausgestaltung des erfindungsgemäßen Verfahrens wechselt beim Eintreten des Objekts in die Bedienzone die Benutzerschnittstelleneinrichtung von dem Anzeigezustand in den Bedienzustand. Dies ist eine für den Benutzer intuitive Vorgehensweise, so dass sie zumeist auch vom Fahrer ausgeführt werden kann, ohne den Blick vom Fahrgeschehen abzuwenden. Der Nutzer muss somit keinen gesonderten Bedienschritt ausführen, um vom Anzeigezustand in den Bedienzustand zu wechseln. Der Benutzer wird somit erst nach der Annäherung z. B. seiner Hand an die Eingabeeinrichtung seinen Blick kurzzeitig auf das Display richten. Er nimmt dann bereits die Informationen des Bedienzustands wahr und kann auf diese Weise sehr schnell den gewünschten Bedienschritt ausführen. Danach kann die Benutzerschnittstelleneinrichtung wieder von dem Bedienzustand in den Anzeigezustand wechseln, so dass der Benutzer die für ihn wesentlichen Informationen der Anzeige der Anwendung, die nicht mit einem Bedienschritt in Verbindung stehen, auf einer großen Fläche des Displays wahrnehmen kann. Will der Nutzer nämlich keinen Bedienschritt ausführen, sind Informationen, welche etwaige Bedienschritte visualisieren, überflüssig. Sie werden bei dem erfindungsgemäßen Verfahren im Anzeigezustand nicht angezeigt.

Gemäß einer Ausgestaltung des erfindungsgemäßen Verfahrens wird die Annäherung des Objekts kapazitiv gemessen. Ferner kann die Annäherung des Objekts mittels Infrarotstrahlung gemessen werden. Bei dem Objekt handelt es sich insbesondere um einen Körperteil eines Nutzers, insbesondere seine Hand oder ein Finger des Nutzers.

Gemäß einer weiteren Ausgestaltung des erfindungsgemäßen Verfahrens werden beim Wechsel vom Anzeigezustand in den Bedienzustand zumindest ein Teil der angezeigten graphischen Objekte vergrößert angezeigt. Durch diese Veränderung der Darstellung ist im Bedienzustand eine leichtere Betätigung von Schaltflächen, die in Verbindung mit graphischen Objekten dargestellt werden, möglich. Ferner können graphische Objekte, die für die Betätigung besonders wichtig sind, leichter erfasst werden. Des Weiteren kann beim Wechsel vom Anzeigezustand in den Bedienzustand der Darstellungsmaßstab verändert, insbesondere vergrößert werden.

Der Bedienzustand betrifft insbesondere die Bedienung einer Anwendung, deren Anzeige im Anzeigezustand dargestellt wird. Auf diese Weise kann der Nutzer ohne weiteres eine logische Verbindung zwischen den möglichen Bedienschritten, die im Bedienzustand visualisiert werden, zu der Anwendung des Anzeigezustands herstellen.

Von besonderer Bedeutung für das erfindungsgemäße Verfahren ist die Länge des Zeitintervalls. Zum einen darf das Zeitintervall nicht zu lang gewählt werden, damit die Anzeige nicht zu lange im Bedienzustand verbleibt. Zum anderen darf das Zeitintervall nicht zu kurz gewählt werden, damit ein ungewollter Wechsel in den Anzeigezustand vermieden wird. Bei der Festlegung der Länge des Zeitintervalls sind insbesondere die Gegebenheiten im Kraftfahrzeug zu berücksichtigen. Das Zeitintervall wird insbesondere auf eine Betätigung der Eingabeeinrichtung durch den Fahrer des Kraftfahrzeugs abgestimmt. Es hat sich dabei herausgestellt, dass ein Zeitintervall mit einer Länge in einem Bereich von einer Sekunde bis sechs Sekunden sehr gut die speziellen Bedingungen im Kraftfahrzeug berücksichtigt. Vorteilhafter Weise liegt die Länge des Zeitintervalls in einem Bereich von zwei Sekunden bis fünf Sekunden.

Bei dem erfindungsgemäßen Verfahren wird die Geschwindigkeit des Fahrzeugs erfasst und die Länge des Zeitintervalls in Abhängigkeit von der Fahrzeuggeschwindigkeit festgelegt. Beispielsweise kann das Zeitintervall bei höheren Fahrzeuggeschwindigkeiten länger gewählt werden als bei niedrigeren Fahrzeuggeschwindigkeiten. Bei höheren Fahrzeuggeschwindigkeiten ist es nämlich häufiger erforderlich, dass der Fahrer während eines Bedienvorgangs diesen für längere Zeit unterbrechen muss, um das Lenkrad mit beiden Händen zu steuern, als das dies bei niedrigeren Fahrzeuggeschwindigkeiten der Fall ist. Außerdem wird der Fahrer des Kraftfahrzeugs bei höheren Geschwindigkeiten den Blick seltener vom Fahrgeschehen abwenden, so dass ein späteres Umschalten in den Anzeigezustand unproblematischer ist.

Die erfindungsgemäße Anzeigeeinrichtung ist dadurch gekennzeichnet, dass die Anzeigeeinrichtung eine Schnittstelle zum Empfang von Daten über die aktuelle Fahrzeuggeschwindigkeit umfasst und dass mit der Benutzerschnittstelleneinrichtung die Länge des Zeitintervalls in Abhängigkeit von der Fahrzeuggeschwindigkeit festlegbar ist.

Die erfindungsgemäße Anzeigeeinrichtung ist insbesondere ausgebildet, um die vorstehend genannten Verfahrensschritte teilweise oder vollständig auszuführen.

Die Benutzerschnittstelleneinrichtung der erfindungsgemäßen Anzeigeeinrichtung umfasst insbesondere einen Speicher, in welchem die Länge des Zeitintervalls gespeichert ist. Die gespeicherte Länge des Zeitintervalls ist z. B. in einem Bereich von einer Sekunde bis sechs Sekunden, bevorzugt in einem Bereich von zwei Sekunden bis fünf Sekunden.

Gemäß einer Ausgestaltung der erfindungsgemäßen Anzeigeeinrichtung ist die Eingabeeinrichtung eine berührungsempfindliche Oberfläche des Displays. Die Bedienzone wird in diesem Fall insbesondere von einem Bereich vor dem Display gebildet. Der Nutzer tritt z. B. mit einem Objekt oder seiner Bedienhand in die Bedienzone ein, wenn der Abstand zu der berührungsempfindlichen Oberfläche des Displays einen bestimmten Wert unterschritten hat.

Gemäß der erfindungsgemäßen Anzeigeeinrichtung umfasst diese eine Schnittstelle zum Empfang von Daten über die aktuelle Fahrzeuggeschwindigkeit. Mittels der Benutzerschnittstelleneinrichtung ist die Länge des Zeitintervalls in diesem Fall in Abhängigkeit von der Fahrzeuggeschwindigkeit festlegbar. Es besteht insbesondere ein funktionaler Zusammenhang zwischen der aktuellen Fahrzeuggeschwindigkeit und der Länge des Zeitintervalls, wobei bevorzugt das Zeitintervall bei höheren Geschwindigkeiten länger ist als bei niedrigeren Geschwindigkeiten.

Die Erfindung wird nun anhand eines Ausführungsbeispiels mit Bezug zu den Zeichnungen erläutert.

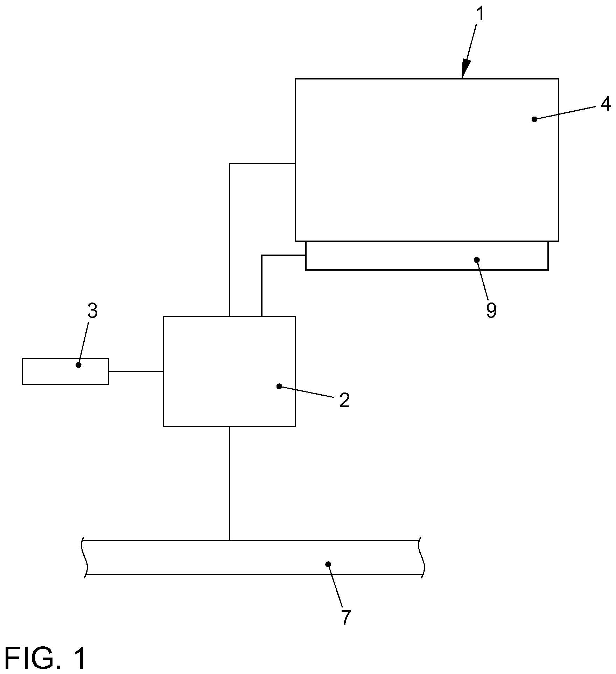

- Figur 1: zeigt schematisch ein Ausführungsbeispiel der erfindungsgemäßen Anzeigeeinrichtung und die Koppelung dieser Anzeigeeinrichtung mit der Elektronik des Kraftfahrzeugs,
- die Figuren 2A und 2B: zeigen eine Anzeige im Anzeigezustand und eine Anzeige im Bedienzustand, die von einem Ausführungsbeispiel des erfindungsgemäßen Verfahrens erzeugt wurden,
- die Figur 3A und 3B: zeigen weitere Anzeigen in einem Anzeigezustand und einem Bedienzustand, die von dem Ausführungsbeispiel des erfindungsgemäßen Verfahrens erzeugt wurden, und
- die Figuren 4A und 4B: zeigen weitere Anzeigen in einem Anzeigezustand und einem Bedienzustand, die von dem Ausführungsbeispiel des erfindungsgemäßen Verfahrens erzeugt wurden.

Die Anzeigeeinrichtung umfasst ein Display 1 zur grafischen Darstellung von Informationen. Bei dem Display 1 kann es sich um ein Matrix-Display handeln, z. B. ein LCD (liquid crystal display), insbesondere ein Farbdisplay in TFT-(thin-film transistor)-Technik. Des Weiteren kann das Display in ein so genanntes twisted nematic-liquid crystal display (TN-LCD), ein super twisted nematic (STN) display, ein Doppelschicht-STN, ein FLC (ferroelectric liquid crystal) Display oder ein SSFLC (surface stabilized ferroelectric liquid crystal) sein. Dem Display 1 ist eine (nicht gezeigte) Hintergrundbeleuchtung zugeordnet, die durch eine oder mehrere lichtemittierende Dioden bereitgestellt werden kann. Das Display 1 ist frei programmierbar, d. h. es lassen sich beliebige Grafikdaten erzeugen, welche auf dem Display 1 dargestellt werden.

Das Display 1 ist insbesondere in einem Bereich des Fahrzeugs befestigt, der zumindest für den Fahrer gut sichtbar ist. Ist die Bedienung der Einrichtungen des Fahrzeugs direkt mit der Anordnung des Displays 1 gekoppelt, so dass der Benutzer z. B. seine Hand oder seinen Finger zumindest in die Nähe des Displays 1 bringen muss, um Eingaben vorzunehmen, ist das Display 1 so angeordnet, dass es der Fahrer des Fahrzeugs leicht mit seiner Hand oder seinem Finger erreichen kann. Beispielsweise kann das Display 1 in der Mittelkonsole des Fahrzeugs untergebracht sein.

Das Display 1 ist mit einer Benutzerschnittstelleneinrichtung 2 verbunden, mit welcher Grafikdaten für auf dem Display 1 darstellbare grafische Objekte erzeugbar sind. Ferner ist die Benutzerschnittstelleneinrichtung 2 mit einer Eingabeeinrichtung 4 verbunden, über welche der Benutzer Einrichtungen des Fahrzeugs, deren Informationen auf dem Display 1 angezeigt werden, steuern kann.

Bei der Eingabeeinrichtung 4 kann es sich beispielsweise um eine Einrichtung zum Erfassen und Auswerten einer Geste eines Körperteils eines Nutzers handeln. Beispielsweise kann die Hand des Benutzers vor dem Display 1 die Geste ausführen. Dabei wird die dreidimensionale Position der Hand in einem bestimmten Aufenthaltsbereich vor dem Display 1 erfasst, ohne dass es erforderlich ist, dass das Display 1 berührt wird. Der zugelassene Aufenthaltsbereich hängt von der Anordnung des Displays 1 in dem Kraftfahrzeug ab. Der Bereich sollte so gewählt sein, dass der Aufenthalt der Hand eines Benutzers, in diesem Aufenthaltsbereich eindeutig mit einer Bedienung der Eingabeeinrichtung 4 in Verbindung gebracht werden kann. Die Grenze des Aufenthaltsbereichs kann z. B. 40 cm bis 10 cm vor dem Display 1 liegen. Wird die Hand des Benutzers näher als dieser Schwellwert an das Display 1 heranbewegt, wird dies von der Eingabeeinrichtung 4 erkannt und die Annäherung wird als Bedienabsicht interpretiert. Dies führt dazu, dass das Display 1 vom Anzeigezustand in einen Bedienzustand wechselt, wie es später erläutert wird. Die Eingabeeinrichtung 4 detektiert die Position und die Bewegung der Hand des Benutzers in dem Aufenthaltsbereich. Dabei werden verschiedene, von der Hand ausgeführte Gesten erkannt und als Eingaben interpretiert.

Die Eingabeeinrichtung 4 kann z. B. Infrarotlichtquellen und Infrarotlichtempfänger umfassen, welche das an der Hand reflektiert Infrarotlicht detektieren. Details einer solchen Eingabeeinrichtung sind in der DE 100 58 244 C2 beschrieben, deren diesbezüglicher Offenbarungsgehalt hiermit in die vorliegende Beschreibung aufgenommen wird. Weitere Eingabeeinrichtungen, die in Verbindung mit der Anzeigeeinrichtung eingesetzt werden können, sind in folgenden Veröffentlichungen beschrieben: DE 103 05 341 A1 und DE 10 2004 048 956 A1.

Des Weiteren kann die Position der Hand und deren zeitliche Veränderung auch mittels eines optischen Systems erfasst werden. Bei diesem System emittiert eine lichtemittierende Diode z. B. rechteckförmiges amplitudenmoduliertes Licht. Dieses Licht wird an dem zu detektierenden Objekt, d. h. der Hand, reflektiert und gelangt nach der Reflexion zu einer Fotodiode. Eine weitere lichtemittierende Diode emittiert ebenfalls rechteckförmiges amplitudenmoduliertes Licht zur Fotodiode, welches jedoch um 180° phasenversetzt ist. Bei der Fotodiode überlagern sich die beiden Lichtsignale und heben sich auf, falls sie genau die gleiche Amplitude aufweisen. Falls sich die Signale bei der Fotodiode nicht aufheben, wird die Lichtemission der zweiten Diode über einen Regelkreis so geregelt, dass sich das Gesamtempfangssignal wieder zu Null ergänzt. Ändert sich die Position des Objekts, ändert sich auch der Lichtanteil, welcher von der ersten lichtemittierenden Diode zur Fotodiode über die Reflexion an dem Objekt gelangt. Dies bewirkt ein Nachführen der Intensität der zweiten lichtemittierenden Diode durch den Regelkreis. Das Regelsignal ist somit ein Maß für die Reflexion des Lichts, welches von der ersten Diode emittiert wird, an dem Objekt. Auf diese Weise lässt sich aus dem Regelsignal ein Signal ableiten, welches für die Position des Objekts charakteristisch ist.

Des Weiteren kann die Eingabeeinrichtung 4 eine berührungsempfindliche Folie sein, die auf dem Display 1 vorgesehen ist. Mit der Folie kann die Position einer Berührung des hinter der Folie angeordneten Displays 1 detektiert werden. Die Folie kann z. B. als resistive Touchfolie, kapazitive Touchfolie oder piezoelektrische Folie ausgebildet sein. Ferner kann die Folie so ausgebildet sein, dass ein Wärmestrom, der z. B. von dem Finger eines Benutzers ausgeht, gemessen wird. Aus der zeitlichen Entwicklung der Berührung der Folie lassen sich verschiedene Eingaben gewinnen. Beispielsweise kann im einfachsten Fall das Berühren der Folie bei einer bestimmten Position einem auf dem Display 1 angezeigten grafischen Objekt zugeordnet werden. Des Weiteren können Gleitbewegungen des Fingers über die Folie interpretiert werden. Insbesondere kann der Benutzer auf diese Weise eine Linie auf dem Display 1 definieren, indem er an einem Punkt die Folie berührt, zu einem anderen Punkt hin auf der Folie gleitet und den Finger bei dem anderen Punkt von der Folie wegnimmt.

Die Benutzerschnittstelleneinrichtung 2 ist ferner mit einem Fahrzeugbus 7 gekoppelt. Über den Fahrzeugbus 7 ist die Benutzerschnittstelleneinrichtung 2 mit Fahrerassistenzsystemen des Fahrzeugs verbunden. Die Benutzerschnittstelleneinrichtung 2 erhält über den Fahrzeugbus 7 Daten dieser Fahrerassistenzsysteme und bereitet die so auf, dass diese Daten dem Fahrer bzw. den Fahrzeuginsassen über das Display 1 grafisch dargestellt werden. Die Benutzerschnittstelleneinrichtung 2 erzeugt hierfür Grafikdaten für auf dem Display 1 darstellbare Objekte, welche unter anderem die Informationen der Fahrerassistenzsysteme grafisch darstellen. Ferner ist die Benutzerschnittstelleneinrichtung 2 über den Fahrzeugbus 7 mit verschiedenen Informations- und Kommunikationssowie Unterhaltungseinrichtungen des Fahrzeugs verbunden. Die vielfältigen Informationen dieser Einrichtungen des Fahrzeugs werden in der Benutzerschnittstelleneinrichtung 2 aufbereitet und in Grafikdaten für eine grafische Darstellung umgewandelt.

Wird die Annäherung eines Objekts nicht von der Eingabeeinrichtung 4 selbst detektiert, ist ein separater Annäherungssensor 9 vorgesehen, mit dem eine Annäherung eines Objekts an die Eingabeeinrichtung 4 detektiert wird. Der Annäherungssensor 9 ist mit der Benutzerschnittstelleneinrichtung 2 verbunden. Der Annäherungssensor 9 überträgt an die Benutzerschnittstelleneinrichtung 2 ein Signal, wenn sich ein Objekt soweit an die Eingabeeinrichtung 2 angenähert hat, dass ein voreingestellter Schwellwert unterschritten wird. Der Annäherungssensor 9 definiert eine Bedienzone vor der Eingabeeinrichtung 4. Wenn die Eingabeeinrichtung 4 als berührungsempfindliche Oberfläche des Displays 1 ausgebildet ist, erstreckt sich die Bedienzone in dem Raum vor der berührungsempfindlichen Oberfläche des Displays 1 bis zu einer bestimmten Entfernung vor dieser Oberfläche.

Des Weiteren ist die Benutzerschnittstelleneinrichtung 2 mit einem Speicher 3 verbunden. Der Speicher 3 kann zum einen Daten speichern, welche die Benutzerschnittstelleneinrichtung 2 zum Erzeugen von Graphikdaten verwendet, die auf dem Display 1 dargestellt werden sollen. Zum anderen kann in dem Speicher 3 ein Zeitintervall gespeichert sein, welches beim Wechsel vom Bedienzustand in den Anzeigezustand von der Benutzerschnittstelleneinrichtung 2 verwendet wird, wie es später erläutert wird.

Im Folgenden werden Beispiele für Anzeigen erläutert, die von einem Ausführungsbeispiel des erfindungsgemäßen Verfahrens mittels der vorstehend beschriebenen Anzeigeeinrichtung erzeugt werden:

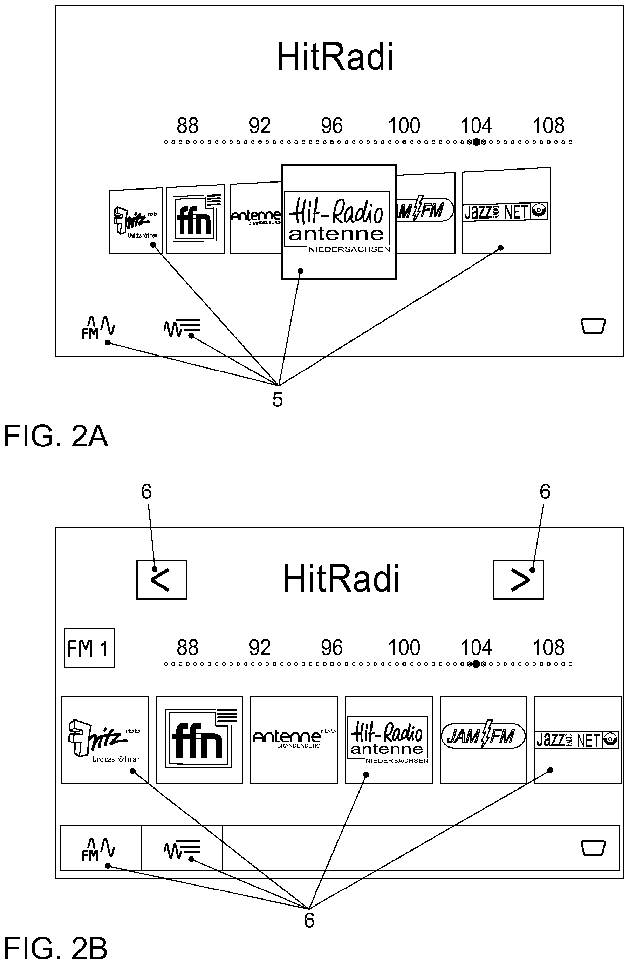

Fig. 2A zeigt eine Informationsdarstellung in einem Anzeigezustand, die in Verbindung mit dem Betrieb und der Steuerung eines Radios des Kraftfahrzeugs von dem erfindungsgemäßen Verfahren erzeugt wird. Es werden für die verschiedenen Radiosender, die von dem Radio aktuell empfangen werden können, graphische Objekte 5 angezeigt. Ein ausgewählter Radiosender wird dabei im Vordergrund dargestellt. Andere Radiosender werden im Hintergrund dargestellt. Des Weiteren wird eine Frequenzskala angezeigt. Ferner wird der ausgewählte Radiosender nochmals alphanumerisch angezeigt. Des Weiteren gibt es verschiedene Anzeigefelder 5, die nach einem Wechsel in den Bedienzustand in Schaltflächen umgewandelt werden.

Will der Nutzer einen anderen Radiosender einstellen, nähert er sich mit seiner Hand der berührungsempfindlichen Oberfläche des Displays 1 an. Tritt er in die vor dem Display 1 definierte Bedienzone ein, wechselt die Informationsdarstellung in den Bedienzustand. Die Informationsanzeige im Bedienzustand ist in Fig. 2B gezeigt. Die graphischen Objekte 5, die im Anzeigezustand nur der Informationsdarstellung dienten und die mit keinen Bedienschritten verknüpft waren, werden zumindest zum Teil in Schaltflächen 6 umgewandelt, die vom Nutzer betätigt werden können. Die graphischen Objekte 6 für die Radiosender werden in diesem Fall im Bedienzustand in einer Reihe in gleicher Größe nebeneinander dargestellt. Des Weiteren werden die Schaltflächen 6 zum Teil vergrößert dargestellt, damit sie vom Nutzer durch die Berührung der berührungsempfindlichen Oberfläche des Displays 1 leichter ausgewählt werden können. Ferner werden gegebenenfalls zusätzliche Schaltflächen 6 dargestellt, die keine Entsprechung im Anzeigezustand haben.

Befindet sich die Bedienhand des Nutzers in der Bedienzone, kann der Nutzer beispielsweise einen Bildlauf (Scrollen) durch die möglichen Radiosender erzeugen. Ferner kann der Nutzer z. B. einen neuen Radiosender auswählen. Entfernt der Nutzer während dieses Bedienvorgangs seine Bedienhand aus der Bedienzone, wird in der Benutzerschnittstelleneinrichtung 2 ein Zähler gestartet. Mittels des Zählers wird die Zeit gemessen, die vergangen ist, seit die Bedienhand des Nutzers die Bedienzone verlassen hat. Erreicht der Zähler die Länge eines definierten Zeitintervalls, welches in den Speicher 3 gespeichert ist und tritt die Bedienhand des Nutzers nicht innerhalb dieses Zeitintervalls wieder in die Bedienzone ein, verändert die Benutzerschnittstelleneinrichtung 2 die Informationsdarstellung auf dem Display 1 so, dass die Informationen wieder im Anzeigezustand dargestellt werden, wie es in Fig. 2A gezeigt ist. Gegebenenfalls wird jedoch ein anderer ausgewählter Radiosender im Vordergrund dargestellt.

Tritt der Nutzer mit seiner Bedienhand jedoch innerhalb des im Speicher 3 gespeicherten Zeitintervalls wieder in die Bedienzone ein, verändert die Benutzerschnittstelleneinrichtung 2 die Informationsdarstellung nicht. Ferner wird der Zähler dann wieder auf den Wert Null zurückgesetzt.

Im vorliegenden Ausführungsbeispiel berechnet die Benutzerschnittstelleneinrichtung 2 die Länge des Zeitintervalls in Abhängigkeit von der Fahrzeuggeschwindigkeit, welche der Benutzerschnittstelleneinrichtung 2 über den Fahrzeugbus 7 übertragen wird.

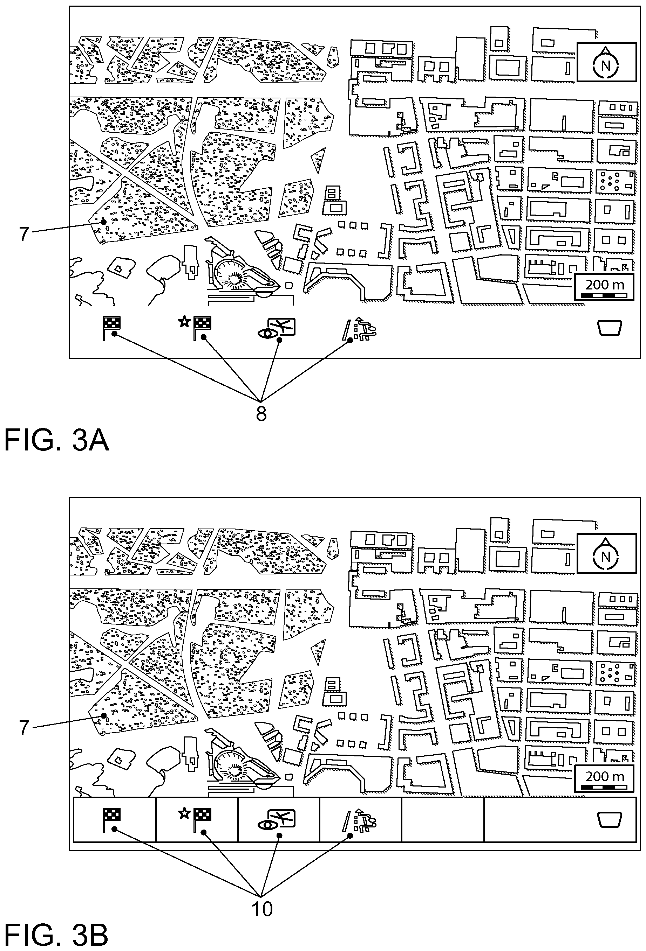

In den Fig. 3A und 3B ist ein weiteres Beispiel für die Anzeige von Informationen im Anzeigezustand (Fig. 3A) und im Bedienzustand (Fig. 3B) gezeigt. Im Anzeigezustand wird eine geographische Karte 7 für das Navigationssystem des Fahrzeugs dargestellt. Ferner werden unterhalb der geographischen Karte 7 graphische Objekte 8 dargestellt, die im Anzeigezustand zwar keinen Bedienschritten zugeordnet sind, welche aber mögliche Bedienschritte visualisieren, die im Bedienzustand ausgeführt werden können.

Nähert der Nutzer sich mit einem Objekt, wie z. B. seiner Bedienhand, der berührungsempfindlichen Oberfläche des Displays 1 an, wechselt die Informationsdarstellung beim Eintritt in die Bedienzone in den Bedienzustand, wie er in Fig. 3B dargestellt ist. Der von der geographischen Karte 7 wiedergegebene Ausschnitt verkleinert sich in diesem Fall. Ferner vergrößern sich die graphischen Objekte 8 und werden zu Schaltflächen 10, denen eine bestimmte Funktion für die Bedienung des Navigationssystems zugeordnet ist.

Wie bereits mit Bezug zu den Fig. 2A und 2B beschrieben, wechselt die Informationsdarstellung wieder in den Anzeigezustand, wenn das Objekt bzw. die Bedienhand des Nutzers die Bedienzone verlässt und nicht innerhalb des Zeitintervalls wieder in die Bedienzone eintritt. Tritt das Objekt bzw. die Bedienhand wieder vor Ablauf des Zeitintervalls in die Bedienzone ein, wird die Informationsdarstellung nicht verändert und verbleibt im Bedienzustand.

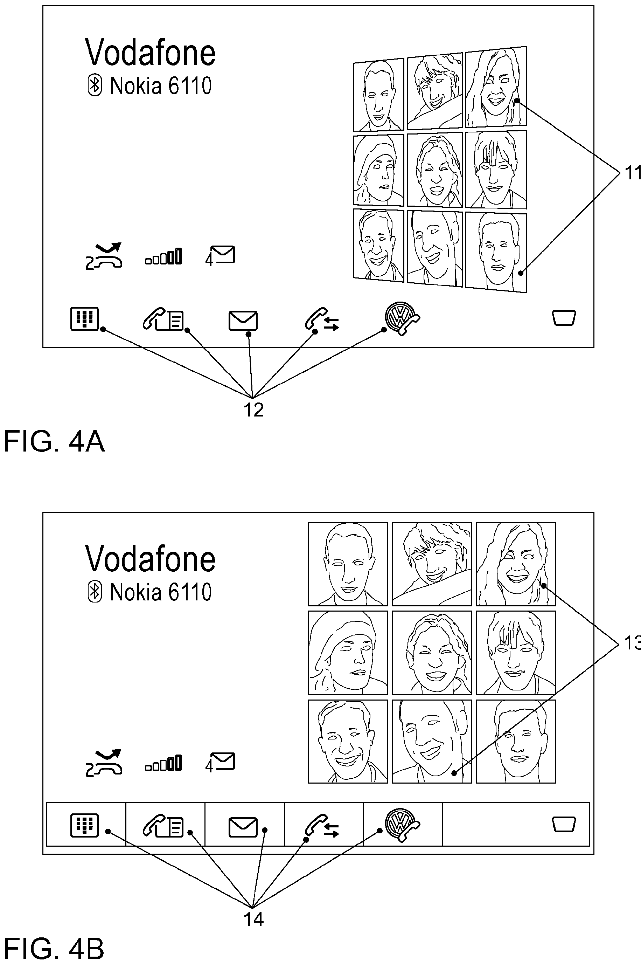

In den Fig. 4A und 4B ist ein weiteres Beispiel für die Anzeige im Anzeigezustand (Fig. 4A) und im Bedienzustand (Fig. 4B) wiedergegeben. Im Anzeigezustand werden, wie in Fig. 4A gezeigt, graphische Objekte 11 für Kontaktpersonen angezeigt. Ferner werden graphische Objekte 12 angezeigt, die im Anzeigezustand keinen Bedienschritten zugeordnet sind, die jedoch möglichen Bedienschritten entsprechen.

Tritt der Nutzer mit einem Objekt oder seiner Bedienhand in die Bedienzone ein, wechselt die Anzeige in den Bedienzustand, wie es in Fig. 4B dargestellt ist. Die graphischen Objekte 11 werden nicht mehr perspektivisch dargestellt, sondern als jeweils gleichgroße Quadrate. Ferner werden diese graphischen Objekte in Schaltflächen 13 umgewandelt, die ein Nutzer betätigen kann, um einen bestimmten Kontakt auszuwählen und z. B. eine Mobilfunkverbindung zu einer gespeicherten Telefonnummer dieser Kontaktperson herzustellen. Außerdem werden verschiedene Schaltflächen 14 zum Bedienen des Mobiltelefons des Kraftfahrzeugs dargestellt.

Wie bei den vorhergehenden Beispielen wechselt die Benutzerschnittstelleneinrichtung 2 von dem Bedienzustand zurück in den Anzeigezustand, wenn das Objekt bzw. die Bedienhand die Bedienzone verlässt und nicht innerhalb eines definierten Zeitintervalls wieder in die Bedienzone eintritt. Tritt das Objekt nach dem Verlassen der Bedienzone vor Ablauf des Zeitintervalls wieder in die Bedienzone ein, bleibt die Informationsdarstellung unverändert im Bedienzustand.

### BEZUGSZEICHENLISTE

- 1: Display
- 2: Benutzerschnittstelleneinrichtung
- 3: Speicher
- 4: Eingabeeinrichtung
- 5: graphisches Objekt
- 6: Schaltfläche
- 7: geographische Karte
- 8: graphisches Objekt
- 9: Annäherungssensor
- 10: Schaltfläche
- 11: graphisches Objekt
- 12: graphisches Objekt
- 13: Schaltfläche
- 14: Schaltfläche

## Patentansprüche

1. Verfahren zum Anzeigen von Informationen mittels eines in einem Kraftfahrzeug befestigten Displays (1), bei dem von einer Benutzerschnittstelleneinrichtung (2) Graphikdaten erzeugt werden, die zumindest einen Teilbereich des Displays (1) so ansteuern, dass in einem Bedienzustand Informationen dargestellt werden, die zumindest einem mittels einer Eingabeeinrichtung (4) ausführbaren Bedienschritt zugeordnet sind, und in einem Anzeigezustand Informationen dargestellt werden, die keinen Bedienschritten zugeordnet sind, und dass ein Eintreten eines Objekts in eine Bedienzone, die der Eingabeeinrichtung (4) zugeordnet ist, und ein Verlassen der Bedienzone detektiert wird, und
wobei die Benutzerschnittstelleneinrichtung (2) von dem Bedienzustand in den Anzeigezustand wechselt, wenn das Objekt die Bedienzone verlässt und wenn das Objekt nicht innerhalb eines definierten Zeitintervalls wieder in die Bedienzone eintritt,
**dadurch gekennzeichnet,**
**dass** die Geschwindigkeit des Fahrzeugs erfasst wird und dass die Länge des Zeitintervalls in Abhängigkeit von der Fahrzeuggeschwindigkeit festgelegt wird.

2. Verfahren nach Anspruch 1,
**dadurch gekennzeichnet,**
**dass** beim Eintreten des Objekts in die Bedienzone die Benutzerschnittstelleneinrichtung (2) von dem Anzeigezustand in den Bedienzustand wechselt.

3. Verfahren nach Anspruch 1 oder 2,
**dadurch gekennzeichnet,**
**dass** beim Wechsel vom Anzeigezustand in den Bedienzustand zumindest ein Teil der angezeigten graphischen Objekte (5, 8, 11, 12) vergrößert angezeigt werden.

4. Verfahren nach einem der vorstehenden Ansprüche,
**dadurch gekennzeichnet,**
**dass** beim Wechsel vom Anzeigezustand in den Bedienzustand der Darstellungsmaßstab verändert wird.

5. Verfahren nach einem der vorstehenden Ansprüche,
**dadurch gekennzeichnet,**
**dass** die Länge des Zeitintervalls in einem Bereich von einer Sekunde bis sechs Sekunden liegt.

6. Verfahren nach einem der vorstehenden Ansprüche,
**dadurch gekennzeichnet,**
**dass** die Länge des Zeitintervalls in einem Bereich von zwei Sekunden bis fünf Sekunden liegt.

7. Verfahren nach einem der vorstehenden Ansprüche,
**dadurch gekennzeichnet,**
**dass** die Eingabeeinrichtung (4) eine berührungsempfindliche Oberfläche des Displays (1) ist.

8. Anzeigeeinrichtung für ein Kraftfahrzeug mit
- einem in dem Kraftfahrzeug befestigten Display (1),
- einer Eingabeeinrichtung (4),
- einem Annäherungssensor (9), mit dem ein Eintreten eines Objekts in eine Bedienzone, die der Eingabeeinrichtung (4) zugeordnet ist, und ein Verlassen der Bedienzone detektierbar ist, und
- einer Benutzerschnittstelleneinrichtung (2), mit welcher Graphikdaten erzeugbar sind, die zumindest einen Teilbereich des Displays (1) so ansteuern, dass in einem Bedienzustand Informationen dargestellt werden, die einem mittels der Eingabeeinrichtung (4) ausführbaren Bedienschritt zugeordnet sind, und in einem Anzeigezustand Informationen dargestellt werden, die keinen Bedienschritten zugeordnet sind,
- wobei die Benutzerschnittstelleneinrichtung (2) so ausgebildet ist, dass von dem Bedienzustand in den Anzeigezustand gewechselt wird, wenn das Objekt die Bedienzone verlässt und wenn das Objekt nicht innerhalb eines definierten Zeitintervalls wieder in die Bedienzone eintritt,
**dadurch gekennzeichnet,**
**dass** die Anzeigeeinrichtung eine Schnittstelle zum Empfang von Daten über die aktuelle Fahrzeuggeschwindigkeit umfasst und dass mit der Benutzerschnittstelleneinrichtung (2) die Länge des Zeitintervalls in Abhängigkeit von der Fahrzeuggeschwindigkeit festlegbar ist.

9. Anzeigeeinrichtung nach Anspruch 8,
**dadurch gekennzeichnet,**
**dass** die Benutzerschnittstelleneinrichtung (2) einen Speicher (3) umfasst, in welchem die Länge des Zeitintervalls gespeichert ist.

10. Anzeigeeinrichtung nach Anspruch 9,
**dadurch gekennzeichnet,**
**dass** die in dem Speicher (3) gespeicherte Länge des Zeitintervalls in einem Bereich von einer Sekunde bis sechs Sekunden liegt.

11. Anzeigeeinrichtung nach einem der Ansprüche 8 bis 10,
**dadurch gekennzeichnet,**
**dass** die Eingabeeinrichtung (4) eine berührungsempfindliche Oberfläche des Displays (1) ist.

## Claims

1. Method of displaying information by means of a display (1) fixed in a motor vehicle, in which a user interface device (2) generates graphic data which activate at least a sub-area of the display (1) such that, in an operating state, information which is assigned to at least one operating step that can be executed by means of an input device (4) is displayed and, in a display state, information which is not assigned to any operating steps is displayed, and that entry of an object into an operating zone which is assigned to the input device (4), and leaving the operating zone, is detected, and
the user interface device (2) changing from the operating state to the display state when the object leaves the operating zone and when the object does not enter the operating zone again within a defined time interval,
**characterized in that**
the speed of the vehicle is detected, and **in that** the length of the time interval is defined as a function of the vehicle speed.

2. Method according to Claim 1,
**characterized in that**
upon entry of the object into the operating zone, the user interface device (2) changes from the display state to the operating state.

3. Method according to Claim 1 or 2,
**characterized in that**
when changing from the display state to the operating state, at least some of the graphic objects (5, 8, 11, 12) displayed are displayed enlarged.

4. Method according to one of the preceding claims,
**characterized in that**
when changing from the display state to the operating state, the display scale is changed.

5. Method according to one of the preceding claims,
**characterized in that**
the length of the time interval lies in a range from one second to six seconds.

6. Method according to one of the preceding claims,
**characterized in that**
the length of the time interval lies in a range from two seconds to five seconds.

7. Method according to one of the preceding claims,
**characterized in that**
the input device (4) is a touch-sensitive surface of the display (1).

8. Display device for a motor vehicle, comprising
- a display (1) fixed in the motor vehicle,
- an input device (4),
- a proximity sensor (9), with which entry of an object into an operating zone which is assigned to the input device (4), and leaving the operating zone, can be detected,
- a user interface device (2), with which it is possible to generate graphic data which activates at least one sub-area of the display (1) such that, in an operating state, information which is assigned to an operating step that can be executed by means of the input device (4) is displayed and, in a display state, information which is not assigned to any operating steps is displayed,
- the user interface device (2) being designed such that a change is made from the operating state to the display state when the object leaves the operating zone and when the object does not enter the operating zone again within a defined time interval,
**characterized in that**
the display device comprises an interface for receiving data about the current vehicle speed, and **in that** the length of the time interval can be defined by the user interface device (2) as a function of the vehicle speed.

9. Display device according to Claim 8,
**characterized in that**
the user interface device (2) comprises a memory (3), in which the length of the time interval is stored.

10. Display device according to Claim 9,
**characterized in that**
the length of the time interval that is stored in the memory (3) lies in the range from one second to six seconds.

11. Display device according to one of Claims 8 to 10,
**characterized in that**
the input device (4) is a touch-sensitive surface of the display (1).

## Revendications

1. Procédé pour afficher des informations au moyen d'un écran (1) fixé dans un véhicule automobile, avec lequel des données graphiques sont générées par un dispositif d'interface utilisateur (2), lesquelles pilotent au moins une zone partielle de l'écran (1) de telle sorte que dans un mode de commande sont représentées des informations qui sont associées à au moins une étape de commande pouvant être exécutée au moyen d'un dispositif de saisie (4), et dans un mode d'affichage sont représentées des informations qui ne sont associées à aucune étape de commande, et la pénétration d'un objet dans une zone de commande qui est associée au dispositif de saisie (4), ainsi qu'une sortie de la zone de commande, étant détectées et
le dispositif d'interface utilisateur (2) changeant de l'état de commande à l'état d'affichage lorsque l'objet quitte la zone de commande et lorsque l'objet ne pénètre pas de nouveau dans la zone de commande au sein d'un intervalle de temps défini,
**caractérisé en ce**
**que** la vitesse du véhicule est acquise et **en ce que** la durée de l'intervalle de temps est fixée en fonction de la vitesse du véhicule.

2. Procédé selon la revendication 1, **caractérisé en ce que** lors de la pénétration de l'objet dans la zone de commande, le dispositif d'interface utilisateur (2) change de l'état d'affichage à l'état de commande.

3. Procédé selon la revendication 1 ou 2, **caractérisé en ce que** lors du changement de l'état d'affichage à l'état de commande, au moins une partie des objets graphiques (5, 8, 11, 12) affichés sont affichés grossis.

4. Procédé selon l'une des revendications précédentes, **caractérisé en ce que** lors du changement de l'état d'affichage à l'état de commande, l'échelle de représentation est modifiée.

5. Procédé selon l'une des revendications précédentes, **caractérisé en ce que** la durée de l'intervalle de temps est comprise dans une plage d'une seconde à six secondes.

6. Procédé selon l'une des revendications précédentes, **caractérisé en ce que** la durée de l'intervalle de temps est comprise dans une plage de deux secondes à cinq secondes.

7. Procédé selon l'une des revendications précédentes, **caractérisé en ce que** le dispositif de saisie (4) est une surface tactile de l'écran (1).

8. Dispositif d'affichage pour un véhicule automobile, comprenant
- un écran (1) fixé dans le véhicule automobile,
- un dispositif de saisie (4),
- un détecteur de proximité (9) qui permet de détecter une pénétration d'un objet dans une zone de commande qui est associée au dispositif de saisie (4) et une sortie de la zone de commande, et
- un dispositif d'interface utilisateur (2) qui permet de générer des données graphiques, lesquelles pilotent au moins une zone partielle de l'écran (1) de telle sorte que dans un mode de commande sont représentées des informations qui sont associées à une étape de commande pouvant être exécutée au moyen du dispositif de saisie (4), et dans un mode d'affichage sont représentées des informations qui ne sont associées à aucune étape de commande,
- le dispositif d'interface utilisateur (2) étant configurés de telle sorte qu'un changement de l'état de commande à l'état d'affichage a lieu lorsque l'objet quitte la zone de commande et lorsque l'objet ne pénètre pas de nouveau dans la zone de commande au sein d'un intervalle de temps défini,
**caractérisé en ce**
**que** le dispositif d'affichage comporte une interface destinée à acquérir des données à propos de la vitesse actuelle du véhicule et **en ce que** la durée de l'intervalle de temps peut être fixée avec le dispositif d'interface utilisateur (2) en fonction de la vitesse du véhicule.

9. Dispositif d'affichage selon la revendication 8, **caractérisé en ce que** le dispositif d'interface utilisateur (2) comporte une mémoire (3) dans laquelle est enregistrée la durée de l'intervalle de temps.

10. Dispositif d'affichage selon la revendication 9, **caractérisé en ce que** la durée de l'intervalle de temps enregistrée dans la mémoire (3) est comprise dans une plage d'une seconde à six secondes.

11. Dispositif d'affichage selon l'une des revendications 8 à 10, **caractérisé en ce que** le dispositif de saisie (4) est une surface tactile de l'écran (1).
